# EUROPEAN PATENT APPLICATION

(11) **EP 4 542 080 A1**
(43) Date of publication of application: **23.04.2025**
(21) Application number: 23823954.5
(22) Date of filing: 14.06.2023
(51) Int. Cl.: F16G 3/10, B29D 29/00, F16G 1/14

(54) **ENDLESS BELT AND METHOD FOR MANUFACTURING ENDLESS BELT**

(30) Priority: 14.06.2022 JP 2022096123
(71) Applicant: Nitta Corporation, Osaka-shi, Osaka 556-0022 (JP)
(72) Inventor: NAGANO, Kodai, Yamatokoriyama-shi, Nara 639-1085 (JP); SATO, Yuki, Yamatokoriyama-shi, Nara 639-1085 (JP)
(74) Representative: Bandpay & Greuter
(86) International application number: PCT/JP2023/022101
(87) International publication number: WO 2023/243664

(57) **Abstract**

Provided are an endless belt and a method for manufacturing an endless belt capable of further improving the strength in a width direction of a joint portion of the endless belt without impairing the flexibility in a joint direction of the joint portion. The endless belt includes: a belt-shaped core layer 12; an intermediate layer 14 made of a thermoplastic resin and laminated on at least one surface of the core layer 12; a surface layer 18 laminated on a surface of the intermediate layer 14; and a joint portion in which a first end portion and a second end portion having mutually complementary shapes are joined, in which a reinforcement sheet 26 is embedded in the intermediate layer 14 to span the joint portion, the reinforcement sheet 26 has gaps 28 penetrating in a thickness direction thereof and is made of a woven fabric woven with a weft 262 having a tensile strength larger than that of a warp, and the reinforcement sheet 26 is disposed such that a tensile strength of the reinforcement sheet 26 is larger in a width direction of the joint portion than in the joint direction of the joint portion.

## Description

### Technical Field

The present invention relates to an endless belt and a method for manufacturing an endless belt.

### Background Art

As an endless belt as a high-speed transmission belt, a belt-shaped belt having a core layer is generally used. The endless belt includes a joint portion in which both ends of the belt-shaped belt are integrally bonded using an adhesive or thermal bonding. Both ends of the belt-shaped belt have mutually complementary shapes, for example, finger shapes. The joint portion of the endless belt has a small tensile strength because the core layer is cut. Accordingly, there is a problem that the endless belt is likely to be broken with the joint portion as a starting point.

Therefore, in the related art, in an endless belt in which a core layer, an intermediate layer containing a thermoplastic resin, and a surface canvas layer are laminated, a technique is known in which a reinforcement sheet that has gaps penetrating in a thickness direction thereof and is made of a knitted fabric is embedded in the intermediate layer to span both ends of a joint portion (for example, see Patent Literature 1).

According to the technique described in Patent Literature 1, when the reinforcement sheet is embedded in the intermediate layer by thermal bonding, a thermoplastic resin of the intermediate layer is filled in the gap portion. Accordingly, there is an effect that both ends of the joint portion of the endless belt can be firmly connected. Here, unless the reinforcement sheet has enough flexibility in a joint direction (belt longitudinal direction) of the joint portion, the endless belt cannot be driven smoothly following the rotation of a driving pulley.

### Citation List

### Patent Literature

Patent Literature 1: JP2021-102970A

### Summary of Invention

### Technical Problem

However, when the flexibility in the joint direction of the reinforcement sheet is emphasized, there is a problem that the strength in a width direction (belt width direction) perpendicular to the joint direction of the joint portion cannot be sufficiently secured.

An object of the present invention is to provide an endless belt and a method for manufacturing an endless belt capable of further improving the strength in a width direction of a joint portion of the endless belt without impairing the flexibility in a joint direction of the joint portion.

### Solution to Problem

An endless belt according to the present invention includes: a belt-shaped core layer; an intermediate layer made of a thermoplastic resin and laminated on at least one surface of the core layer; a surface layer laminated on a surface of the intermediate layer; and a joint portion in which a first end portion and a second end portion having mutually complementary shapes are joined, in which a reinforcement sheet is embedded in the intermediate layer to span the joint portion, the reinforcement sheet has gaps penetrating in a thickness direction thereof and is made of a woven fabric woven with a plurality of yarns including at least a plurality of warps and a plurality of wefts spanning the plurality of warps, and the reinforcement sheet is disposed such that a tensile strength of the reinforcement sheet is larger in a width direction of the joint portion spanning a joint direction of the joint portion than in the joint direction of the joint portion.

Regarding a method for manufacturing an endless belt according to the present invention, the endless belt includes a belt-shaped core layer, an intermediate layer made of a thermoplastic resin and laminated on at least one surface of the core layer, a surface layer laminated on a surface of the intermediate layer, and a joint portion in which a first end portion and a second end portion having mutually complementary shapes are joined, the method includes: a step of cutting the intermediate layer at both end portions of the belt-shaped shape of the core layer to separate the intermediate layer into a core-layer-side intermediate portion and a surface-layer-side intermediate portion; a step of processing both end portions of the endless belt into mutually complementary shapes to form the first end portion and the second end portion; a step of disposing a reinforcement sheet, that has gaps penetrating in a thickness direction thereof and is made of a woven fabric woven with a plurality of warps and a plurality of wefts, on a surface of the core-layer-side intermediate portion to span the first end portion and the second end portion; and a step of covering the reinforcement sheet with the surface-layer-side intermediate portion and the surface layer, thermally bonding the surface-layer-side intermediate portion and the core-layer-side intermediate portion, and filling the gaps of the reinforcement sheet with a thermoplastic resin to embed the reinforcement sheet in the intermediate layer, in which in the step of disposing the reinforcement sheet, the reinforcement sheet is disposed such that a tensile strength of the reinforcement sheet is larger in a width direction of the joint portion spanning a joint direction of the joint portion than in the joint direction of the joint portion.

### Advantageous Effects of Invention

According to the present invention, by arranging the direction in which the tensile strength of the reinforcement sheet is large in the width direction of the joint portion, the strength in the width direction of the joint portion can be further improved without impairing the flexibility in the joint direction of the joint portion.

### Brief Description of Drawings

Fig. 1a is a plan view of an endless belt according to an embodiment.
Fig. 1b is a cross-sectional view taken along a line 1b-1b in Fig. 1a.
Fig. 2a is a plan view of a reinforcement sheet.
Fig. 2b is a cross-sectional view of the reinforcement sheet according to the embodiment.
Fig. 3 is a partially enlarged cross-sectional view schematically illustrating a cross section of the endless belt according to the embodiment.
Fig. 4a is a cross-sectional view illustrating a method for manufacturing the endless belt according to the embodiment in a stepwise manner, which indicates a state before cutting is performed.
Fig. 4b is a cross-sectional view illustrating the method for manufacturing the endless belt according to the embodiment in a stepwise manner, which indicates a state after cutting is performed.
Fig. 5a is a cross-sectional view illustrating the method for manufacturing the endless belt according to the embodiment in a stepwise manner, which indicates a state in which the reinforcement sheet is installed.
Fig. 5b is a cross-sectional view illustrating the method for manufacturing the endless belt according to the embodiment in a stepwise manner, which indicates a state in which covering is performed with a separation portion.
Fig. 6 is a schematic diagram illustrating a use state of the endless belt according to the embodiment.
Fig. 7a is a plan view of a reinforcement sheet according to a modification of the embodiment.
Fig. 7b is a cross-sectional view of the reinforcement sheet illustrated in Fig. 7a.
Fig. 8a is a plan view of a reinforcement sheet according to a modification of the embodiment.
Fig. 8b is a cross-sectional view of the reinforcement sheet illustrated in Fig. 8a.

### Description of Embodiments

Hereinafter, an embodiment of the present invention will be described in detail with reference to the drawings.

### (Overall Configuration)

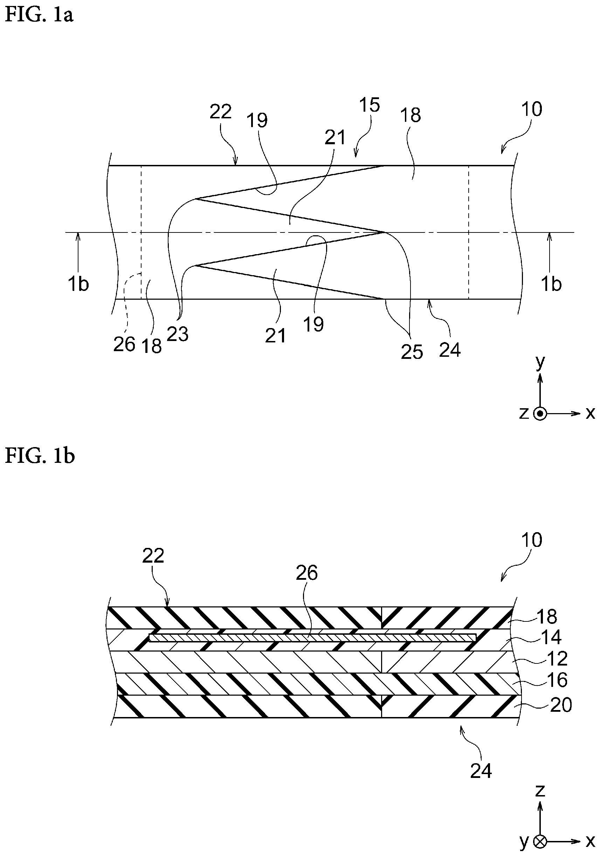

Figs. 1a and 1b each illustrate an endless belt 10 according to the present embodiment, in which Fig. 1a is a plan view of the endless belt, and Fig. 1b is a cross-sectional view of the endless belt 10 in a thickness direction. In the following description, as illustrated in Figs. 1a and 1b, a belt longitudinal direction is referred to as a "joint direction" as an x-direction, a belt width direction perpendicularly spanning the belt longitudinal direction is referred to as a "width direction" as a y-direction, and a z-direction is referred to as a "thickness direction".

The endless belt 10 is obtained by joining end portions of a belt-shaped core layer 12 at a joint portion 15, and includes the core layer 12, a first intermediate layer 14, a second intermediate layer 16, a first surface layer 18, and a second surface layer 20. A thickness of the endless belt 10 is usually 0.5 mm to 10.0 mm, and a width perpendicular to the joint direction of the joint portion 15 is usually 10 mm to 5000 mm.

The core layer 12 is made of canvas using polyester fiber, nylon fiber, aramid fiber, or glass fiber as a raw material for a warp or a weft.

The first intermediate layer 14 is laminated on one surface of the core layer 12, and the second intermediate layer 16 is laminated on the other surface of the core layer 12. The first intermediate layer 14 and the second intermediate layer 16 are made of a thermoplastic resin. Specifically, examples of the thermoplastic resin that can be used include polyurethane elastomer, polyamide elastomer, polyester elastomer, polyvinyl chloride elastomer, or polyolefin elastomer.

The first surface layer 18 is laminated on a surface of the first intermediate layer 14, and the second surface layer 20 is laminated on a surface of the second intermediate layer 16. The first surface layer 18 and the second surface layer 20 function as a protective material for protecting the core layer 12, and are made of rubber, resin, canvas, or synthetic leather.

Specifically, examples of the rubber that can be used to form the first surface layer 18 and the second surface layer 20 include millable urethane, nitrile rubber (NBR), hydrogenated nitrile rubber (H-NBR), ethylene propylene diene rubber (EPDM), ethylene propylene rubber (EPM), or chlorosulfonated polyethylene. Examples of the resin that can be used include polyurethane elastomer, polyamide elastomer, polyester elastomer, polyvinyl chloride elastomer, or polyolefin elastomer. Examples of the canvas that can be used include, for example, canvas using fibers such as polyester fibers or nylon fibers. The second surface layer 20 and the first surface layer 18 may be made of the same material or may be made of different materials.

The endless belt 10 includes the joint portion 15. The joint portion 15 is a finger joint. The joint portion 15 includes a first end portion 22 and a second end portion 24 in a joined state. The first end portion 22 includes a tip end of the belt-shaped belt (not illustrated) in the joint direction. The second end portion 24 includes a base end of the belt-shaped belt (not illustrated) in the joint direction. The endless belt 10 is formed in an endless shape by joining the first end portion 22 and the second end portion 24.

The first end portion 22 and the second end portion 24 each have a plurality of mutually complementary concave portions 19 and convex portions 21. The concave portion 19 has an isosceles triangular shape and a rectangular triangular shape recessed inward in the joint direction of the endless belt 10. The convex portion 21 has an isosceles triangular shape protruding outward in the joint direction. The first end portion 22 and the second end portion 24 have a saw blade shape in which a plurality of concave portions 19 and convex portions 21 are formed. A length of the concave portion 19 and the convex portion 21 in the width direction is 5 mm to 30 mm, and a length of the concave portion 19 and the convex portion 21 in the joint direction is 5 mm to 250 mm.

The first intermediate layer 14 of the endless belt 10 includes a reinforcement sheet 26 at a position spanning a boundary between the first end portion 22 and the second end portion 24. The reinforcement sheet 26 is disposed in a region wider than a range from a base end 23 of the concave portion 19 of the first end portion 22 to a base end 25 of the concave portion 19 of the second end portion 24. A length of the reinforcement sheet 26 in the width direction is about - 1 mm to + 0 mm with respect to the length of the endless belt 10 in the width direction. A length of the reinforcement sheet 26 in the joint direction is larger than the length of the concave portion 19 or the convex portion 21 in the joint direction by about 20 mm and larger than a length of the joint portion 15 by about 30 mm.

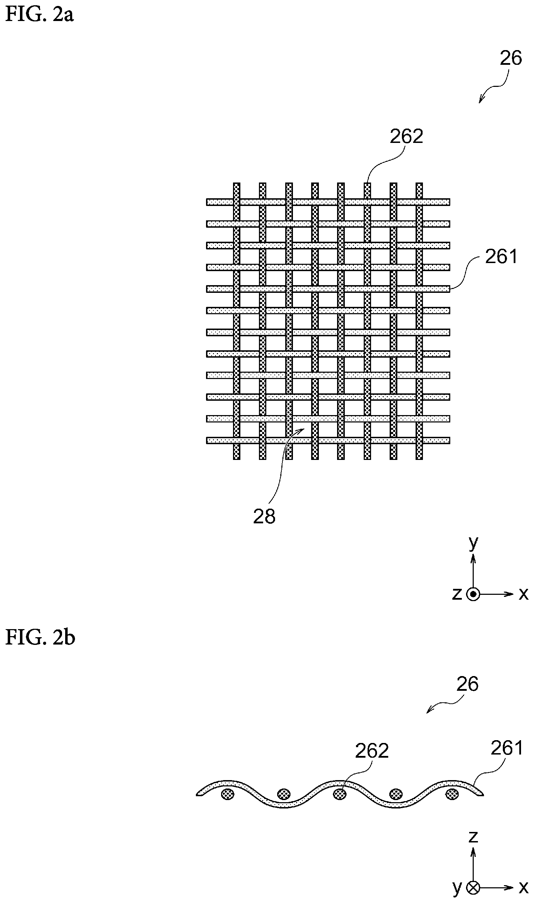

As illustrated in Figs. 2a and 2b, the reinforcement sheet 26 is made of a plain woven fabric in which warps 261 and wefts 262 are woven to cross each other alternately above and below in the thickness direction. In regions surrounded by the warps 261 and the wefts 262, a plurality of gaps 28 penetrating in the thickness direction (z-direction) of the reinforcement sheet 26 are formed. The warps 261 are disposed to extend along the joint direction (x-direction) of the joint portion 15. The wefts 262 are disposed to extend along the width direction (y-direction) of the joint portion 15 spanning the joint direction of the joint portion 15. The gaps 28 are formed in rectangular regions surrounded by the warps 261 running in parallel and the wefts 262 running in parallel. In the present embodiment, a square region in which the warps 261 and the wefts 262 have the same density is defined as the gap 28, and the gap 28 is formed at a position where the warp 261 and the weft 262 intersect.

As the warp 261, polyester fiber, nylon fiber, cotton, or the like having good flexibility is used. A diameter of the weft 262 may be the same as or different from that of the warp 261, and for example, aramid fiber, or glass fiber, which has a high tensile strength, is used for the weft 262, and the weft 262 is formed to have a tensile strength larger than that of the warp 261. Therefore, the reinforcement sheet 26 is embedded in the first intermediate layer 14 such that the direction in which the warp 261 extends is disposed in the joint direction and the direction in which the weft 262 having a tensile strength larger than that of the warp 261 extends is disposed in the width direction to make the tensile strength in the width direction (y-direction) larger than the tensile strength in the joint direction (x-direction) of the joint portion 15. The warp 261 and the weft 262 may be a single yarn, or may be configured from a plurality of yarns such as a two-ply yarn.

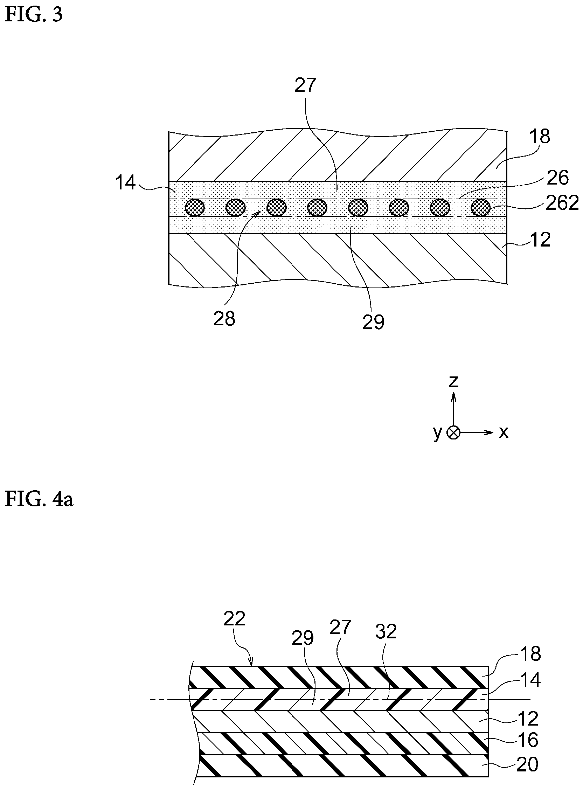

As illustrated in Fig. 3, the first intermediate layer 14 includes a surface-layer-side intermediate portion 27 disposed on a first surface layer 18 side of the reinforcement sheet 26 and a core-layer-side intermediate portion 29 disposed on a core layer 12 side of the reinforcement sheet 26. The surface-layer-side intermediate portion 27 and the core-layer-side intermediate portion 29 are connected by the thermoplastic resin constituting the first intermediate layer 14 in the gap 28 of the reinforcement sheet 26. That is, the gap 28 of the reinforcement sheet 26 is filled with the thermoplastic resin of the first intermediate layer 14, and the reinforcement sheet 26 is integrated with the first intermediate layer 14.

In the reinforcement sheet 26, a ratio of the gap 28 per unit area is 35% or more and 70% or less as viewed in the thickness direction. When the ratio of the gap 28 is 70% or less, the reinforcement sheet 26 has sufficient strength. When the ratio of the gap 28 is 35% or more, the surface-layer-side intermediate portion 27 and the core-layer-side intermediate portion 29 are sufficiently integrated, and peeling of the first intermediate layer 14 and the reinforcement sheet 26 can be prevented.

The reinforcement sheet 26 has a thickness of about 50% of a thickness of the first intermediate layer 14 in a state of being embedded in the first intermediate layer 14. When the thickness of the reinforcement sheet 26 is significantly more than 50% of the thickness of the first intermediate layer 14, the flexibility of the reinforcement sheet 26 is impaired, and the reinforcement sheet 26 may fall off from the first intermediate layer 14 during driving of the endless belt 10. When the thickness of the reinforcement sheet 26 is significantly less than 50% of the thickness of the first intermediate layer 14, an effect as a reinforcement material is impaired, and the strength of the endless belt 10 cannot be sufficiently improved.

### (Manufacturing Method)

Next, a method for manufacturing the endless belt 10 will be described. As illustrated in Fig. 4a, in the first intermediate layer 14 of each of the first end portion 22 and the second end portion 24 before joining, cutting is performed from respective tip ends in the joint direction to form cut portions 32. Fig. 4a illustrates the first end portion 22 as a representative. The cut portion 32 is formed parallel to the joint direction of the joint portion 15. A length of the cut portion 32 in the joint direction is longer than a length of the concave portion 19 and the convex portion 21 formed later in a longitudinal direction. The cut portion 32 is preferably formed at a center position in the thickness direction of the first intermediate layer 14. The first intermediate layer 14 after the cut portion 32 is formed is separated into the surface-layer-side intermediate portion 27 integrated with the first surface layer 18 and the core-layer-side intermediate portion 29 integrated with the core layer 12.

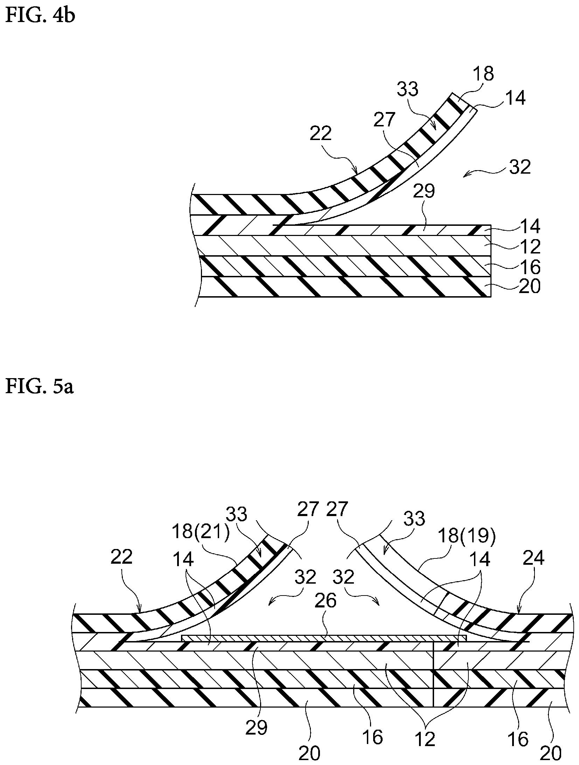

As illustrated in Fig. 4b, a separation portion 33 including the first surface layer 18 and the surface-layer-side intermediate portion 27 is formed in the first end portion 22 after the cut portion 32 is formed. The separation portion 33 can be folded back in a direction in which the surface-layer-side intermediate portion 27 and the core-layer-side intermediate portion 29 are separated from each other. The direction in which the surface-layer-side intermediate portion 27 and the core-layer-side intermediate portion 29 are separated is a direction in which a tip end of the separation portion 33 is bent toward the surface of the first surface layer 18. Although not illustrated, the separation portion 33 is also formed in the second end portion 24 after the cut portion 32 is formed.

The first end portion 22 and the second end portion 24 are processed by using a known tool to form the plurality of concave portions 19 and the plurality of convex portions 21, respectively. A range in the joint direction in which the concave portion 19 and the convex portion 21 are formed is narrower than a region in which the cut portion 32 is formed. The first surface layer 18 is oriented upward, and the first end portion 22 and the second end portion 24 are butted against each other by combining the concave portion 19 and the convex portion 21.

As illustrated in Fig. 5a, the reinforcement sheet 26 is disposed on the core-layer-side intermediate portion 29 to span the boundary between the first end portion 22 and the second end portion 24 in a state in which the separation portion 33 is folded back. The reinforcement sheet 26 is disposed in the region in which the cut portions 32 are formed beyond the range in which the concave portions 19 and the convex portions 21 are formed. The reinforcement sheet 26 is disposed such that the direction in which the warp 261 extends is the joint direction of the joint portion 15, and the direction in which the weft 262 having a tensile strength larger than that of the warp 261 and disposed perpendicular to the warp 261 extends is the width direction of the joint portion 15.

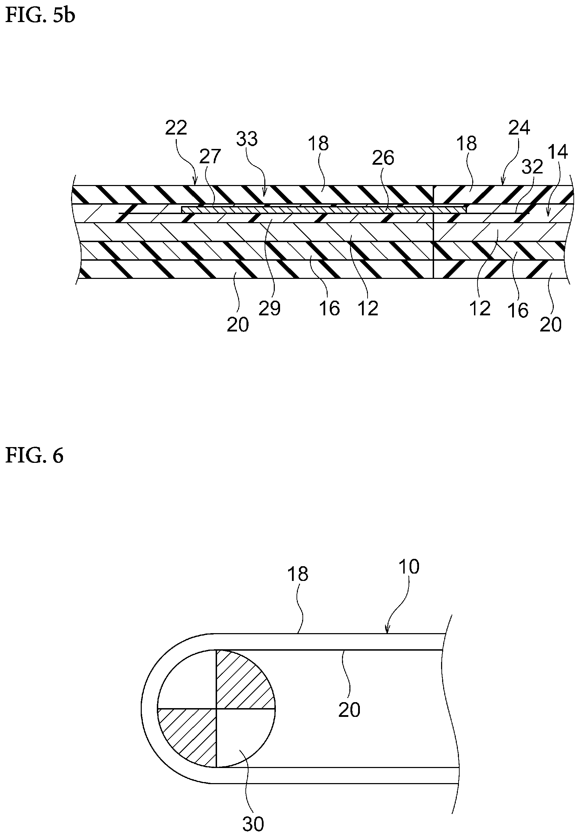

As illustrated in Fig. 5b, the reinforcement sheet 26 is covered with the separation portion 33, and the surface-layer-side intermediate portion 27 is brought into contact with the surface of the reinforcement sheet 26. The concave portions 19 and the convex portions 21 of the separation portions 33 are combined and butted against each other. In this state, around the first end portion 22 and the second end portion 24, at least the region in which the cut portion 32 is formed is thermally bonded while being pressurized in the thickness direction. By heating, the thermoplastic resin of the first intermediate layer 14 and the second intermediate layer 16 melts, and the tip ends of the first end portion 22 and the second end portion 24 are fused to each other.

In the first intermediate layer 14, the molten thermoplastic resins in the surface-layer-side intermediate portion 27 and the core-layer-side intermediate portion 29 flow through the gap 28 of the reinforcement sheet 26 and are fused to each other through the gap 28. When the thermoplastic resin is cooled and solidified, the first intermediate layer 14 and the second intermediate layer 16 are integrated with each other between the first end portion 22 and the second end portion 24.

The surface-layer-side intermediate portion 27 and the core-layer-side intermediate portion 29 are integrated with each other via the gap 28 of the reinforcement sheet 26. As a result, the first intermediate layer 14 holds the reinforcement sheet 26 at a position spanning the boundary between the first end portion 22 and the second end portion 24. In this manner, the endless belt 10 in which the reinforcement sheet 26 is embedded in the first intermediate layer 14 can be obtained.

### (Operation and Effect)

As illustrated in Fig. 6, the endless belt 10 can be wound around a driving pulley 30 such that the second surface layer 20 and a surface of the driving pulley 30 are in contact with each other so as to be used as a transmission belt or a conveyance belt. Since the surface-layer-side intermediate portion 27 and the core-layer-side intermediate portion 29 of the first intermediate layer 14 are integrated through the gap 28 of the reinforcement sheet 26, the first intermediate layer 14 is more firmly joined to the reinforcement sheet 26. Accordingly, the endless belt 10 can prevent peeling between the reinforcement sheet 26 and the first intermediate layer 14 and further improve the strength of the joint portion 15. When the ratio of the gap 28 per unit area as viewed in the thickness direction is 35% or more and 70% or less, the strength of the joint portion 15 can be more reliably improved.

In addition, the reinforcement sheet 26 according to the present embodiment is made of a plain woven fabric woven with a plurality of warps 261 and a plurality of wefts 262 having a tensile strength larger than that of the warps 261 and spanning the warps 261. Accordingly, the tensile strengths of the reinforcement sheet 26 in the direction in which the warp 261 extends and the direction in which the weft 262 extends can be made different. Accordingly, in the endless belt 10, by arranging the direction in which the tensile strength of the reinforcement sheet 26 is large in the width direction of the joint portion 15, the tensile strength in the width direction of the joint portion 15 can be further improved without impairing the flexibility in the joint direction of the joint portion 15. In particular, by using polyester fiber, nylon fiber, cotton, or the like for the warp 261, the flexibility of the joint portion 15 of the endless belt 10 in the joint direction is not impaired.

### (Modification of Embodiment)

The present invention is not limited to the embodiment described above, and includes the following modifications. In the embodiment described above, the first intermediate layer 14 and the first surface layer 18 illustrated in Fig. 1b are applied as an intermediate layer in which a reinforcement sheet is embedded to span a joint portion, and a surface layer laminated on a surface of the intermediate layer, whereas the present invention is not limited thereto, and the second intermediate layer 16 and the second surface layer 20 illustrated in Fig. 1b may also be applied.

In addition, in the embodiment described above, as a reinforcement sheet in which a plurality of wefts having a tensile strength larger than that of warps are disposed in a direction spanning a joint direction of a joint portion to make the tensile strength in a width direction larger than the tensile strength in the joint direction, the reinforcement sheet 26 is applied in which the plurality of wefts 262 having a tensile strength larger than that of the warps 261 are disposed along the width direction (y-direction) perpendicularly spanning the joint direction (x-direction) of the joint portion 15 to make the tensile strength in the width direction larger than the tensile strength in the joint direction, whereas the present invention is not limited thereto. As another embodiment, for example, a reinforcement sheet may be applied in which the plurality of wefts 262 having a tensile strength larger than that of the warps 261 are disposed in a direction (y-direction) obliquely spanning the joint direction (x-direction) of the joint portion 15 at an acute angle or an obtuse angle to make the tensile strength in the width direction larger than the tensile strength in the joint direction. As another reinforcement sheet, the warps 261 may not be disposed along the joint direction of the joint portion 15, and a reinforcement sheet may be applied in which the warps are disposed to be inclined at an acute angle from the joint direction to make the tensile strength in the width direction larger than the tensile strength in the joint direction.

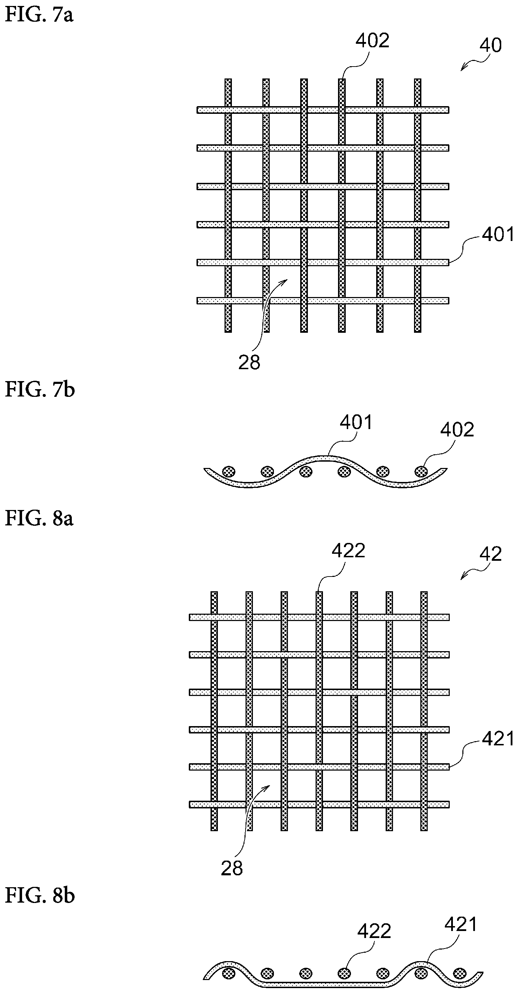

In the embodiment described above, as a reinforcement sheet made of a woven fabric woven with a plurality of yarns including at least a plurality of warps and a plurality of wefts spanning the warps, the reinforcement sheet 26 made of a plain woven fabric woven with the plurality of warps 261 and the plurality of wefts 262 is applied, whereas the present invention is not limited thereto, and a reinforcement sheet made of a woven fabric woven with a plurality of yarns including a plurality of warps and a plurality of wefts in various weaving methods may be applied. For example, as illustrated in Figs. 7a and 7b, a reinforcement sheet 40 may be made of a twill woven fabric. Warps 401 of the reinforcement sheet 40 are passed to span two wefts 402 on a lower surface and then span two wefts 402 on an upper surface, and this is repeated for a plurality of wefts 402 that are perpendicular to the warps 401. The twill woven reinforcement sheet 40 can be obtained by weaving the weft 402 in the same manner as the warp 401.

Further, as illustrated in Figs. 8a and 8b, a reinforcement sheet 42 may be made of a satin woven fabric. Warps 421 of the reinforcement sheet 42 are passed to span four wefts 422 on an upper surface and then span one weft 422 on a lower surface, and this is repeated for a plurality of wefts 422 that are perpendicular to the warps 421. The satin woven reinforcement sheet 42 can be obtained by weaving the weft 422 in the same manner as the warp 421.

Even with such reinforcement sheets 40 and 42, similarly to the embodiment described above, it is possible to realize the reinforcement sheets 40 and 42 in which the tensile strength in the width direction is made larger than the tensile strength in the joint direction by using the plurality of wefts 402 and 422 having a tensile strength larger than that of the warps 401 and 421, and the like, and it is possible to achieve the same effect as that of the embodiment described above.

In the embodiment described above, the densities (numbers) of the warps 261 and the wefts 262 of the reinforcement sheet 26 are the same in the joint direction and the width direction, but the present invention is not limited thereto. For example, the density of the wefts may be made larger than the density of the warps to further improve the tensile strength in the width direction of the joint portion, and further improve the flexibility in the joint direction. In such a configuration, even if the tensile strengths of the warp 261 and the weft 262 are the same, by making the density of the weft larger than the density of the warp, it is possible to realize a reinforcement sheet in which the tensile strength in the width direction is made larger than the tensile strength in the joint direction, and it is possible to achieve the same effect as the embodiment described above.

In the embodiment described above, the warp 261 and the weft 262 of the reinforcement sheet 26 have the same diameter, but the present invention is not limited thereto. For example, a woven fabric in which the diameter of the weft 262 is made larger than the diameter of the warp 261 may be used as the reinforcement sheet. In such a configuration, even if the warp 261 and the weft 262 are made of the same yarn material, by making the diameter of the weft larger than the diameter of the warp, it is possible to realize a reinforcement sheet in which the tensile strength in the width direction is made larger than the tensile strength in the joint direction, and it is possible to achieve the same effect as the embodiment described above.

In the embodiment described above, the reinforcement sheet 26 is woven such that the warps 261 and the wefts 262 are perpendicular to each other, but the present invention is not limited thereto. For example, a reinforcement sheet in which wefts are woven to obliquely cross warps may be used. In addition, the specific structure, shape, and the like in the embodiment of the present invention may be other structures and the like as long as the object of the present invention can be achieved.

### Reference Sign List

- 10: endless belt
- 12: core layer
- 14: first intermediate layer (intermediate layer)
- 15: joint portion
- 18: first surface layer (surface layer)
- 19: concave portion
- 20: second surface layer
- 21: convex portion
- 26, 40, 42: reinforcement sheet
- 27: surface-layer-side intermediate portion
- 28: gap
- 29: core-layer-side intermediate portion
- 32: cut portion
- 261, 401, 421: warp
- 262, 402, 422: weft

## Claims

1. An endless belt comprising:
a belt-shaped core layer;
an intermediate layer made of a thermoplastic resin and laminated on at least one surface of the core layer;
a surface layer laminated on a surface of the intermediate layer; and
a joint portion in which a first end portion and a second end portion having mutually complementary shapes are joined, wherein
a reinforcement sheet is embedded in the intermediate layer to span the joint portion,
the reinforcement sheet has gaps penetrating in a thickness direction thereof and is made of a woven fabric woven with a plurality of yarns including at least a plurality of warps and a plurality of wefts spanning the plurality of warps, and
the reinforcement sheet is disposed such that a tensile strength of the reinforcement sheet is larger in a width direction of the joint portion spanning a joint direction of the joint portion than in the joint direction of the joint portion.

2. The endless belt according to claim 1, wherein
in the reinforcement sheet, the wefts having a tensile strength larger than that of the warps are disposed in a direction spanning the joint direction of the joint portion.

3. The endless belt according to claim 1 or 2, wherein
in the reinforcement sheet, the plurality of warps are disposed in the joint direction of the joint portion, and the plurality of wefts having a tensile strength larger than that of the warps are disposed in the width direction of the joint portion.

4. A method for manufacturing an endless belt, the endless belt including
a belt-shaped core layer,
an intermediate layer made of a thermoplastic resin and laminated on at least one surface of the core layer,
a surface layer laminated on a surface of the intermediate layer, and
a joint portion in which a first end portion and a second end portion having mutually complementary shapes are joined, the method comprising:
a step of cutting the intermediate layer at both end portions of the belt-shaped shape of the core layer to separate the intermediate layer into a core-layer-side intermediate portion and a surface-layer-side intermediate portion;
a step of processing both end portions of the endless belt into mutually complementary shapes to form the first end portion and the second end portion;
a step of disposing a reinforcement sheet, that has gaps penetrating in a thickness direction thereof and is made of a woven fabric woven with a plurality of warps and a plurality of wefts, on a surface of the core-layer-side intermediate portion to span the first end portion and the second end portion; and
a step of covering the reinforcement sheet with the surface-layer-side intermediate portion and the surface layer, thermally bonding the surface-layer-side intermediate portion and the core-layer-side intermediate portion, and filling the gaps of the reinforcement sheet with a thermoplastic resin to embed the reinforcement sheet in the intermediate layer, wherein
in the step of disposing the reinforcement sheet, the reinforcement sheet is disposed such that a tensile strength of the reinforcement sheet is larger in a width direction of the joint portion spanning a joint direction of the joint portion than in the joint direction of the joint portion.
